# FASCICULE DE BREVET EUROPEEN

(11) **EP 3 830 435 B1**
(45) Date de publication et mention de la délivrance du brevet: **07.09.2022**
(21) Numéro de dépôt: 19794601.5
(22) Date de dépôt: 18.09.2019
(51) Int. Cl.: F16C 11/10, F16C 11/06, F16B 11/00, F16B 21/07

(54) **DISPOSITIF DE LIAISON MODULAIRE VERROUILLABLE**
VERRIEGELBARE MODULARE VERBINDUNGSVORRICHTUNG
LOCKABLE MODULAR CONNECTION DEVICE

(30) Priorité: 18.09.2018 FR 1858408
(43) Date de publication de la demande: 09.06.2021
(73) Titulaire: ArianeGroup SAS, 78130 Les Mureaux (FR)
(72) Inventeur: LEBORGNE, Florian, 78180 MONTIGNY LE BRETONNEUX (FR); OGUEY, Eric, 95540 MERY-SUR-OISE (FR)
(74) Mandataire: Brevalex
(86) Numéro de dépôt international: PCT/FR2019/052184
(87) Numéro de publication internationale: WO 2020/058636

(56) Documents cités:
- EP-A1- 3 098 463
- WO-A1-97/37144
- DE-A1-102011 000 805

## Description

### DOMAINE TECHNIQUE

La présente invention concerne un dispositif de liaison modulaire verrouillable entre deux pièces distinctes.

### ÉTAT DE LA TECHNIQUE

Bien que non exclusivement, la présente invention s'applique plus particulièrement à un équipement d'un engin spatial.

Dans une telle application, le dispositif de liaison est destiné à être monté entre deux pièces de l'équipement spatial, ces deux pièces pouvant présenter une orientation angulaire donnée entre elles.

De par le milieu dans lequel l'engin spatial peut évoluer, le dispositif de liaison doit pouvoir garantir le maintien mécanique des pièces distinctes l'une de l'autre avec un angle approprié, tout en résistant aux contraintes thermiques.

On connaît des éléments de liaison qui sont destinés à assurer ce type de fonctions. Or, un équipement spatial comprend une pluralité de couples de pièces pouvant présenter des orientations ou angles différents d'un couple de pièces à l'autre. Par conséquent, il est généralement d'usage d'utiliser des éléments de liaison spécifiques à chaque couple de pièces.

Cette solution usuelle nécessite donc un nombre important d'éléments de liaison, ce qui se révèle être coûteux en production et en mise en œuvre.

Cette solution usuelle n'est donc pas complètement satisfaisante pour les applications envisagées. Un dispositif de liaison avec rotule et dispositif de verrouillage selon le préambule de la revendication 1 est divulgué dans la publication WO97/37144.

### EXPOSÉ DE L'INVENTION

La présente invention a pour but de remédier à ces inconvénients.

Elle concerne un dispositif de liaison modulaire selon la revendication 1 verrouillable entre deux pièces distinctes, comportant un premier élément destiné à être lié à l'une des pièces et un second élément destiné à être lié à l'autre des pièces.

Le premier élément comprend une tige solidaire d'une rotule de forme globalement sphérique, et le second élément est un logement creux dans lequel est agencée ladite rotule, le logement étant globalement conformé à la rotule et étant pourvu d'une ouverture que la tige traverse, ledit dispositif de liaison comprenant également un espace dit espace interne entre une face interne du logement et une face périphérique de la rotule en regard l'une de l'autre, et un élément de verrouillage agencé entre le logement et la rotule.

Au moins l'un parmi la rotule et le logement est pourvu de motifs respectivement sur au moins une partie de la face périphérique de la rotule ou sur au moins une partie de la face interne du logement.

De plus, l'élément de verrouillage est constitué d'un matériau durci qui remplit la totalité dudit espace interne et à l'égard duquel lesdits motifs forment des butées, pour maintenir dans une position fixe ladite rotule dans ledit logement.

Ainsi, grâce à l'invention, on obtient un dispositif de liaison permettant de s'adapter à la position angulaire relative nécessaire entre les deux pièces par l'intermédiaire d'une liaison de type rotule générée par la coopération entre lesdits premier et second éléments, puis de verrouiller cette même position à l'aide de l'élément de verrouillage et des motifs.

De plus, ce dispositif de liaison peut être produit en grand nombre, sans avoir à tenir compte, au préalable, des spécificités de chaque couple de pièces devant être liées entre elles. Cela entraîne une simplification de la production et de l'assemblage du dispositif de liaison permettant de réduire les coûts de production et de mise en œuvre.

Dans le cadre de la présente invention :
- le terme « verrouillable » fait référence à la possibilité de blocage de tout mouvement du premier élément formé de la rotule et de la tige par rapport au second élément formé par le logement ; et
- le terme « modulaire » se réfère à la possibilité de choisir une position angulaire entre les deux pièces présentant une orientation angulaire donnée entre elles.

De préférence, des motifs, parmi lesdits motifs, sont agencés sur au moins une partie de la face périphérique de la rotule.

De préférence, des motifs, parmi lesdits motifs, sont agencés sur au moins une partie de la face interne du logement.

Dans un mode de réalisation préféré, les motifs de la face périphérique de la rotule et les motifs de la face interne du logement sont complémentaires.

Avantageusement, le logement est pourvu d'au moins un trou de remplissage permettant d'accéder à l'espace interne.

Par ailleurs, l'élément de verrouillage de préférence est réalisé en polymère.

En outre, le logement est de préférence réalisé dans un des matériaux suivants : matériau métallique, matériau polymère, matériau composite, matériau céramique.

De préférence, la tige et la rotule sont réalisées dans un des matériaux suivants : matériau métallique, matériau polymère, matériau composite, matériau céramique.

La présente invention concerne également un procédé de fabrication selon la revendication 9 d'un dispositif de liaison modulaire verrouillable tel que celui spécifié ci-dessus, qui est remarquable en ce qu'il est de type additif (ou ALM pour « Addictive Layer Manufacturing ») par ajout de matière.

En outre, la présente invention concerne également un procédé de verrouillage selon la revendication 10 d'un dispositif de liaison modulaire verrouillable tel que celui spécifié ci-dessus.

Selon l'invention, ce procédé de verrouillage comprend :
- une étape d'orientation angulaire relative entre les deux pièces, via une orientation angulaire entre le premier élément et le second élément ; puis
- une étape de remplissage, consistant à remplir la totalité de l'espace interne avec un matériau fluide destiné à former l'élément de verrouillage, le matériau fluide étant introduit par ledit au moins un trou de remplissage dont est pourvu le logement ; et
- une étape de formation de l'élément de verrouillage par durcissement du matériau fluide, moyennant quoi l'élément de verrouillage verrouille l'orientation angulaire relative entre les deux pièces.

### BRÈVE DESCRIPTION DES FIGURES

Les figures annexées feront bien comprendre comment l'invention peut être réalisée. Sur ces figures, des références identiques désignent des éléments semblables. Plus particulièrement :
- la figure 1 est une vue schématique en perspective d'un dispositif de liaison, selon un mode de réalisation préféré ;
- les figures 2a et 2b sont des vues schématiques en perspective d'une partie d'un dispositif de liaison, dans deux positions angulaires différentes ;
- les figures 3a à 3d sont des vues schématiques en perspective d'une rotule du dispositif de liaison, pourvue de motifs différents ;
- les figures 4a et 4b sont des vues schématiques en coupe longitudinale d'un logement du dispositif de liaison, respectivement de face et de biais ; et
- les figures 5a et 5b sont des vues schématiques en coupe longitudinale des forces pouvant agir sur le dispositif de liaison, respectivement, en l'absence et en présence de motifs sur les premier et second éléments.

### DESCRIPTION DÉTAILLÉE

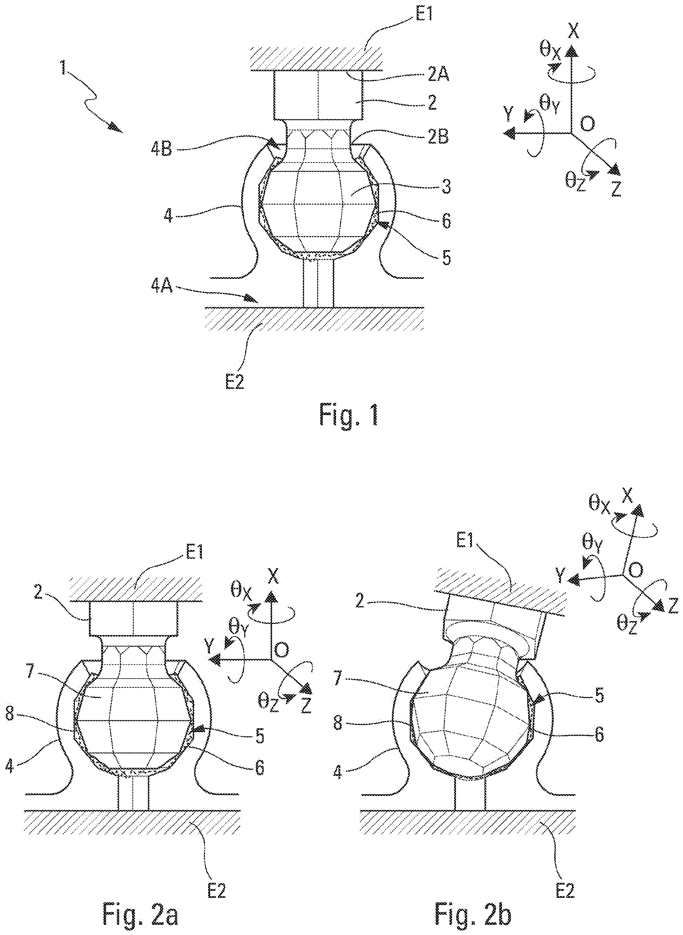

Le dispositif de liaison modulaire verrouillable 1 (ci-après « dispositif de liaison 1 »), représenté schématiquement dans un mode de réalisation sur la figure 1, est destiné à réaliser une liaison entre deux pièces E1 et E2 mécaniques distinctes. Ce dispositif de liaison 1 comprend un premier élément destiné à être lié à l'une des pièces E1 et un second élément destiné à être lié à l'autre pièce E2. Ces pièces E1 et E2 sont représentées partiellement et très schématiquement sur la figure 1.

Comme montré sur la figure 1, le premier élément comprend une tige 2 de forme allongée, solidaire par une première extrémité 2A à la pièce E1 et une rotule 3 solidaire de la tige 2 par une seconde extrémité 2B de cette dernière, opposée à la première extrémité 2A.

La rotule 3 est agencée dans un logement 4 creux. Le logement 4, représentant ledit second élément, est conformé à la forme de la rotule 3. De plus, le logement 4 est solidaire par une base 4A à la pièce E2. Le logement 4 est également pourvu d'une ouverture 4B agencée de manière opposée à la base 4A du logement 4. L'ouverture 4B est traversée par la tige 2.

Dans la suite de la description, on utilise un repère R associé au dispositif de liaison 1 et défini selon un centre O correspondant au centre de la rotule 3 et trois axes orthogonaux, à savoir un axe dit longitudinal X qui est orienté selon la tige 2, et deux axes médian Y et transversal Z qui définissent un plan médian XY et un plan transversal YZ. Pour des raisons de clarté, le repère R est représenté à côté du dispositif de liaison 1 sur les figures 1, 2a et 2b. De plus, les adjectifs « interne » et « périphérique » sont définis par rapport à la direction radiale à partir du centre O selon l'un quelconque des axes longitudinal X, médian Y et transversal Z, respectivement vers le centre O et vers l'extérieur de la rotule 3.

Dans un mode de réalisation préféré représenté sur les figures 1, 2a et 2b, la rotule 3 est de forme globalement sphérique. La rotule 3 est pourvue d'une face périphérique 7, qui est en regard d'une face interne 8 du logement 4. Le dispositif de liaison 1 comprend, de plus, un espace interne 5 entre la face interne 8 du logement 4 et la face périphérique 7 de la rotule 3.

La conformation du logement 4 à la forme de la rotule 3 rend la rotule 3 apte à effectuer des mouvements de rotation autour des trois axes longitudinal X, médian Y et transversal Z (figures 2a et 2b). La rotule 3 étant solidaire de la tige 2, ses mouvements de rotation correspondent à des mouvements de rotation de la tige 2. Les rotations permises pour la rotule 3 définissent un angle *θx* lorsqu'il s'agit d'une rotation autour de l'axe longitudinal X, un angle *θy* lorsqu'il s'agit d'une rotation autour de l'axe médian Y et un angle *θz* lorsqu'il s'agit d'une rotation autour de l'axe transversal Z.

L'ouverture 4B du logement 4, qui est, de préférence, de section circulaire, délimite des angles maximaux *θymax* ou *θzmax* de rotation de la tige 2 et de la rotule 3 autour des axes médian Y et transversal Z. De plus, la conformation du logement 4 prévient tout mouvement de translation de la rotule 3 selon les axes longitudinal X, médian Y et transversal Z. Comme représenté sur la figure 2a, les pièces E1 et E2 peuvent être agencées dans des plans transversaux YZ, parallèles entre eux et perpendiculaire à l'axe longitudinal X par lequel passe la tige 2. Dans une telle configuration, les positions respectives de pièces E1 et E2 l'une par rapport à l'autre peuvent correspondre à une orientation angulaire relative définie par un angle *θx* (non représenté). Comme représenté sur la figure 2b, la rotation du premier élément comprenant la rotule 3 et la tige 2 par rapport au deuxième élément comprenant le logement 4, est possible autour des axes médian Y et transversal Z. Ainsi, une rotation de la tige 2 et de la rotule 3 dans le logement 4 par rapport à l'axe transversal Z induit une orientation angulaire relative entre les premier et second éléments et donc entre les pièces E1 et E2 d'angle *θz*. La rotation de la rotule 3 et donc de la tige 2 dans le logement 4 par rapport à l'axe médian Y induit une orientation angulaire relative entre les premier et second éléments et donc entre les pièces E1 et E2 d'angle *θy*. L'orientation angulaire relative entre le premier élément comprenant la tige 2 et la rotule 3 et le second élément comprenant le logement 4 est définie par la valeur des angles *θx, θy* et/ou *θz* représentés sur les figures 1, 2a et 2b. Cette orientation angulaire relative est représentative de l'orientation angulaire entre les pièces E1 et E2.

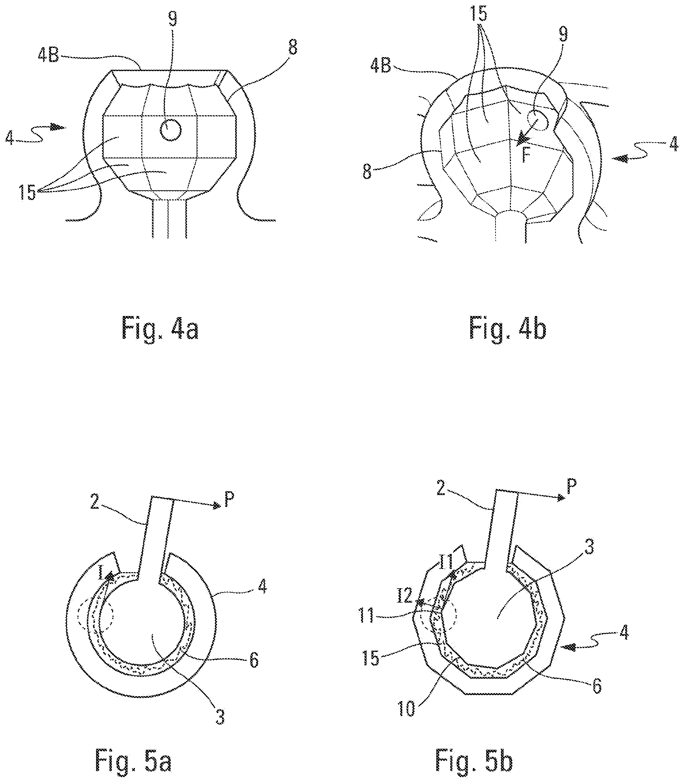

Par ailleurs, comme représenté sur les figures 4a et 4b, le logement 4 est pourvu d'un trou 9 dit trou de remplissage. Dans un mode de réalisation particulier, ledit trou 9 de remplissage permet d'accéder, depuis une face périphérique du logement 4, à l'espace interne 5.

Dans un mode de réalisation particulier non représenté, le logement 4 peut être pourvu d'une pluralité de trous de remplissage, répartis de manière homogène ou non autour de la périphérie du logement 4.

En outre, le dispositif de liaison 1 comprend un élément de verrouillage 6 agencé entre le logement 4 et la rotule 3. Cet élément de verrouillage 6 est apte à remplir au moins une partie de l'espace interne 5 entre la face interne 8 du logement 4 et la face périphérique 7 de la rotule 3 pour maintenir dans une position fixe la rotule 3 dans le logement 4. L'élément de verrouillage 6 est, de préférence, réalisé dans un matériau de type élastomère. Ce type de matériau permet d'amortir les vibrations et/ou les chocs que peut subir le dispositif de liaison 1 au cours de son utilisation.

Dans une variante, l'élément de verrouillage 6 est un métal. De plus, dans un mode de réalisation particulier, l'élément de verrouillage 6 comprend une mousse ou une résine. Cette résine peut être thermodurcissable ou thermoplastique.

Dans un mode de réalisation préféré, l'élément de verrouillage 6 est introduit dans l'espace interne 5 par l'intermédiaire dudit au moins un trou 9 de remplissage afin de combler l'espace interne 5 et empêcher tout mouvement de la rotule 3 par rapport au logement 4. Dans une variante, l'élément de verrouillage 6 est introduit dans l'espace interne 5 par l'intermédiaire de l'ouverture 4B du logement 4.

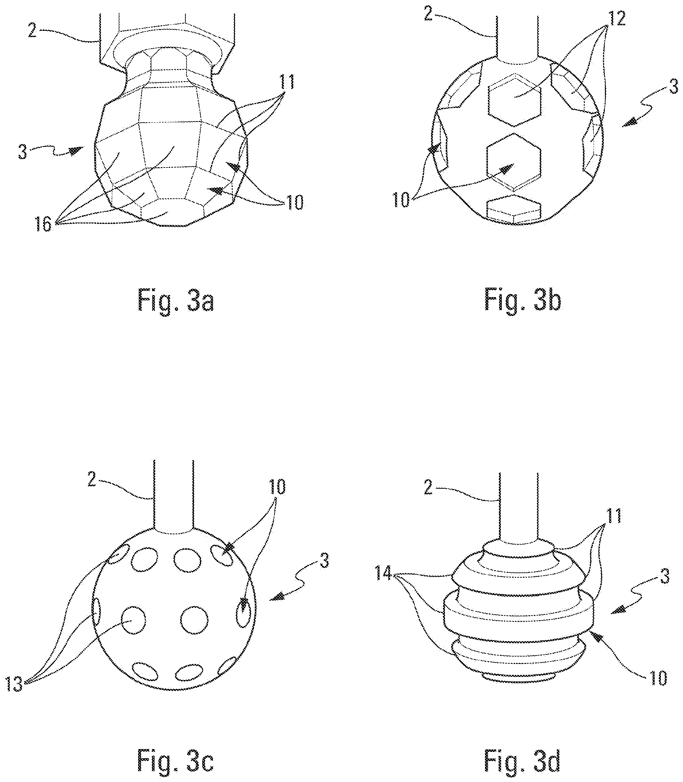

Dans un mode de réalisation préféré, la rotule 3 est pourvue de motifs 10 agencés, de préférence de manière régulière, sur au moins une partie de sa face périphérique 7. Ces motifs 10 forment des butées mécaniques 11 permettant une amélioration de la tenue mécanique du dispositif de liaison 1 par l'élément de verrouillage 6. Dans l'exemple de la figure 3a, ces motifs 10 correspondent à des facettes 16 planes agencées de manière régulière. Les bords de chaque facette 16 forment les butées mécaniques 11.

Dans un autre mode de réalisation représenté sur les figures 3b et 3c, la rotule 3 est pourvue d'une pluralité d'alvéoles 12, par exemple de forme hexagonale, ou de trous 13 de section circulaire, agencés de manière régulière sur sa face périphérique 7.

Dans un autre mode de réalisation représenté sur la figure 3d, la face périphérique 7 de la rotule 3 est pourvue d'une pluralité de stries 14 agencées dans le plan transversal YZ. Ces stries 14 forment les butées mécaniques 11 pour l'élément de verrouillage 6.

Ces alvéoles 12, ces trous 13 et ces stries 14 représentent d'autres exemples (non limitatifs) de motifs 10 de la face périphérique 7 dont la rotule 3 peut être pourvue.

Dans un mode de réalisation préféré, le logement 4 est également pourvu de motifs 15 sur au moins une partie de sa face interne 8, comme représenté sur les figures 4a et 4b. Ces motifs 15 correspondent à des facettes planes agencées de manière régulière. Ces motifs 15 forment également des butées mécaniques 11 permettant d'améliorer la tenue mécanique du dispositif de liaison 1 par l'élément de verrouillage 6. D'autres exemples de motifs 15 sont, bien entendu, envisageables.

Dans le mode de réalisation préféré représenté sur les figures 1, 2a et 2b, les motifs 10 et 15 présents sur la face périphérique 7 de la rotule 3 et sur la face interne 8 du logement 4 sont complémentaires.

Le dispositif de liaison 1, tel que décrit ci-dessus, peut être fabriqué selon différents procédés de fabrication. Dans un mode de réalisation préféré, le procédé de fabrication est de type additif (ou ALM pour « Additive Layer Manufacturing ») par ajout de matière, c'est-à-dire qu'il réalise une impression 3D. La tige 2, la rotule 3 et le logement 4 sont fabriqués, de préférence, dans un matériau structural métallique ou polymère. Ce procédé de fabrication de type additif permet, entre autres, d'obtenir un dispositif de liaison 1 qui intègre directement les fonctions de positionnement angulaire et de fixation aux pièces E1 et E2, en supprimant les phases d'assemblage supplémentaires normalement requises.

Dans un autre mode de réalisation, le dispositif de liaison 1 est fabriqué de manière usuelle, par l'insertion de la rotule 3 solidaire de la tige 2 dans le logement 4 creux constitué de deux parties qui sont, par la suite, fixées l'une à l'autre.

Par ailleurs, le logement 4 est réalisé dans un matériau de type métallique, polymère, composite ou céramique.

En outre, la tige 2 et la rotule 3 sont réalisées dans un matériau de type métallique, polymère, composite ou céramique.

La mise en place et les conditions d'utilisation du dispositif de liaison 1 sont expliquées ci-dessous.

À titre d'exemple, les pièces E1 et E2 peuvent former un couple de pièces fixées sur un équipement spatial. En fonction des besoins de liaison variés sur un tel équipement et à cause des contraintes mécaniques, vibratoires et/ou thermiques que peut subir l'équipement spatial au cours de son utilisation, les pièces E1 et E2 ont un agencement présentant une orientation angulaire donnée entre elles.

De manière indépendante, les éléments du dispositif de liaison 1 comprenant la tige 2, la rotule 3 et le logement 4 sont fabriqués, de préférence par un procédé de type additif par ajout de matière. Ces éléments forment une articulation de type rotule à doigt dont l'orientation angulaire entre le premier et le second élément est, par la suite, verrouillée par l'élément de verrouillage 6.

Au cours d'une étape S1 d'orientation angulaire, on fait effectuer à la tige 2 un déplacement rotatoire autour d'un ou de plusieurs des axes longitudinal X, médian Y et/ou transversal de manière à faire correspondre l'orientation angulaire entre le premier élément et le second élément avec l'orientation angulaire relative entre les pièces E1 et E2. La tige 2 étant solidaire de la rotule 3, ses déplacements rotatoires entraînent des déplacements rotatoires identiques de la rotule 3 dans le logement 4. La présence de l'espace interne 5 initialement vide entre la face périphérique 7 de la rotule 3 et la face interne 8 du logement 4 autorise de tels déplacements. Les déplacements rotatoires de la tige 2 et donc de la rotule 3 sont délimités par des angles maximaux *θymax* et *θzmax* respectivement autour des axes médian Y et transversal Z. Ces deux angles maximaux dépendent de la taille de l'ouverture 4B du logement 4. En revanche, le déplacement rotatoire du premier élément comprenant la tige 2 et la rotule 3 dans le logement 4, correspondant au second élément, n'est pas limité autour de l'axe longitudinal X. Ainsi, la position de la tige 2 par rapport à la base 4A du logement 4, cette position étant dans les limites permises par l'ouverture 4B du logement 4, est représentative de l'orientation angulaire souhaitée entre les deux pièces E1 et E2.

Au cours d'une étape S2 suivante de remplissage, l'élément de verrouillage 6 sous forme fluide, de préférence un matériau élastomère, est introduit dans le logement 4. Comme illustré par une flèche F sur la figure 4b, l'élément de verrouillage 6 est introduit par l'intermédiaire du trou 9 de remplissage de façon à remplir l'espace interne 5 entre la rotule 3 et le logement 4. Plus précisément, l'élément de verrouillage 6 remplit l'espace entre les motifs 10 de la face périphérique 7 de la rotule 3 et les motifs 15 de la face interne du logement 4. Ainsi, l'ensemble formé par la tige 2, la rotule 3 et le logement 4 correspond à une liaison de type rotule à doigt dont le débattement angulaire est rendu impossible par la présence de l'élément de verrouillage 6.

L'élément de verrouillage 6, lors d'une étape S3 suivante de verrouillage, sèche. À titre d'exemple, le séchage de l'élément de verrouillage 6 est effectué par chauffage du dispositif de liaison 1. Une fois séché, l'élément de verrouillage 6 fige la position de la rotule 3 dans le logement 4 et donc de la tige 2. Dans un mode de réalisation préféré, la tige 2 est ensuite rendue solidaire de la pièce E1 par son extrémité 2A par tout moyen approprié et le logement 4 est rendu solidaire de la pièce E2 par sa base 4B par tout moyen approprié.

Comme représenté sur les figures 5a et 5b, le dispositif de liaison 1 peut subir des efforts mécaniques et des vibrations au cours de son utilisation, sur un équipement spatial notamment. Ces efforts mécaniques sont représentés par une flèche P. En l'absence de motifs 10 sur la face périphérique 7 de la rotule 3 et/ou de motifs 15 sur la face interne 8 du logement 4, les efforts mécaniques engendrent des cisaillements internes I tangentiels aux interfaces entre l'élément de verrouillage 6 et la face périphérique 7 de la rotule 3.

La présence de motifs 10 sur la face périphérique 7 de la rotule 3 et/ou de motifs 15 sur la face interne 8 du logement 4 génère des butées mécaniques 11. Les efforts mécaniques P générés lors de l'utilisation du dispositif de liaison 1 engendrent alors des composantes de compression I1 et I2. Ces compressions sont absorbées par l'élément de verrouillage 6. Cette décomposition des efforts mécaniques selon plusieurs axes permet une meilleure tenue mécanique du dispositif de liaison 1.

## Revendications

1. Dispositif de liaison modulaire verrouillable entre deux pièces distinctes, ledit dispositif de liaison (1) comportant un premier élément destiné à être lié à l'une (E1) des pièces (E1, E2) et un second élément destiné à être lié à l'autre (E2) des pièces (E1, E2),
dans lequel le premier élément comprend une tige (2) solidaire d'une rotule (3) de forme globalement sphérique, le second élément comprend un logement (4) creux dans lequel est agencée ladite rotule (3), le logement (4) étant globalement conformé à la rotule (3) et étant pourvu d'une ouverture (4B) que la tige (2) traverse, dans lequel ledit dispositif de liaison (1) comprend également un espace dit espace interne (5) entre une face interne (8) du logement (4) et une face périphérique (7) de la rotule (3) en regard l'une de l'autre, et un élément de verrouillage (6) agencé entre le logement (4) et la rotule (3), et dans lequel au moins l'un parmi la rotule (3) et le logement (4) est pourvu de motifs (10, 15) respectivement sur au moins une partie de la face périphérique (7) de la rotule ou sur au moins une partie de la face interne (8) du logement (4), **caractérisé en ce que** l'élément de verrouillage est constitué d'un matériau durci qui remplit la totalité dudit espace interne (5) et à l'égard duquel lesdits motifs (10, 15) forment des butées, pour maintenir dans une position fixe ladite rotule (3) dans ledit logement (4).

2. Dispositif de liaison selon la revendication 1,
dans lequel la rotule (3) est pourvue, sur au moins une partie de sa face périphérique (7), de motifs (10).

3. Dispositif de liaison selon la revendication 1 ou 2,
dans lequel le logement (4) est pourvu, sur au moins une partie de sa face interne (8), de motifs (15).

4. Dispositif de liaison selon les revendications 2 et 3,
dans lequel les motifs (10) de la face périphérique (7) de la rotule (3) et les motifs (15) de la face interne (8) du logement (4) sont complémentaires.

5. Dispositif de liaison selon l'une quelconques des revendications précédentes,
dans lequel le logement (4) est pourvu d'au moins un trou (9) de remplissage permettant d'accéder à l'espace interne (5).

6. Dispositif de liaison selon l'une quelconque des revendications précédentes,
dans lequel l'élément de verrouillage (6) est réalisé en polymère.

7. Dispositif de liaison selon l'une quelconque des revendications précédentes,
dans lequel le logement (4) est réalisé dans un des matériaux suivants : matériau métallique, matériau polymère, matériau composite, matériau céramique.

8. Dispositif de liaison selon l'une quelconque des revendications précédentes,
dans lequel la tige (2) et la rotule (3) sont réalisées dans un des matériaux suivants : matériau métallique, matériau polymère, matériau composite, matériau céramique.

9. Procédé de fabrication d'un dispositif de liaison modulaire verrouillable selon l'une quelconque des revendications 1 à 8,
**caractérisé en ce qu'**il est de type additif par ajout de matière.

10. Procédé de verrouillage d'un dispositif de liaison modulaire verrouillable selon l'une quelconque des revendications 1 à 4 et 6 à 8, prise en combinaison avec la revendication 5,
**caractérisé en ce qu'**il comprend :
- une étape (S1) d'orientation angulaire relative entre les deux pièces (E1, E2), via une orientation angulaire entre le premier élément et le second élément ; puis
- une étape (S2) de remplissage, consistant à remplir la totalité de l'espace interne (5) avec un matériau fluide destiné à former l'élément de verrouillage (6), le matériau fluide étant introduit par ledit au moins un trou (9) de remplissage dont est pourvu le logement (4) ; et
- une étape (S3) de formation de l'élément de verrouillage (6) par durcissement du matériau fluide, moyennant quoi l'élément de verrouillage (6) verrouille l'orientation angulaire relative entre les deux pièces (E1, E2).

## Patentansprüche

1. Verriegelbare, modulare Verbindungsvorrichtung zwischen zwei separaten Teilen, wobei die Verbindungsvorrichtung (1) ein erstes Element, das mit dem einen (E1) der Teile (E1, E2) verbunden werden soll, und ein zweites Element, das mit dem anderen (E2) der Teile (E1, E2) verbunden werden soll, enthält, wobei das erste Element einen Schaft (2) aufweist, der fest mit einem Kugelkopf (3) mit insgesamt kugelförmiger Gestalt verbunden ist, das zweite Element eine hohle Aufnahme (4) aufweist, in der der Kugelkopf (3) angeordnet ist, die Aufnahme (4) insgesamt an den Kugelkopf (3) angeformt und mit einer Öffnung (4B) versehen ist, durch die sich der Schaft (2) erstreckt, wobei die Verbindungsvorrichtung (1) ferner einen Raum, Innenraum (5) genannt, zwischen einer Innenfläche (8) der Aufnahme (4) und einer Umfangsfläche (7) des Kugelkopfes (3), die einander gegenüberliegen, und ein zwischen der Aufnahme (4) und dem Kugelkopf (3) angeordnetes Verriegelungselement (6) enthält, und wobei zumindest eines aus Kugelkopf (3) und Aufnahme (4) mit Mustern (10, 15) jeweils auf zumindest einem Abschnitt der Umfangsfläche (7) des Kugelkopfs bzw. auf zumindest einem Abschnitt der Innenfläche (8) der Aufnahme (4) versehen ist,
**dadurch gekennzeichnet, dass** das Verriegelungselement aus einem gehärteten Material besteht, das den gesamten Innenraum (5) ausfüllt und gegenüber dem die Muster (10, 15) Anschläge bilden, um den Kugelkopf (3) in der Aufnahme (4) in einer festen Position zu halten.

2. Verbindungsvorrichtung nach Anspruch 1,
wobei der Kugelkopf (3) an zumindest einem Abschnitt seiner Umfangsfläche (7) mit Mustern (10) versehen ist.

3. Verbindungsvorrichtung nach Anspruch 1 oder 2,
wobei die Aufnahme (4) an zumindest einem Abschnitt ihrer Innenfläche (8) mit Mustern (15) versehen ist.

4. Verbindungsvorrichtung nach den Ansprüchen 2 und 3,
wobei die Muster (10) auf der Umfangsfläche (7) des Kugelkopfes (3) und die Muster (15) auf der Innenfläche (8) der Aufnahme (4) komplementär ausgebildet sind.

5. Verbindungsvorrichtung nach einem der vorhergehenden Ansprüche,
wobei die Aufnahme (4) mit zumindest einem Füllloch (9) versehen ist, das den Zugang zum Innenraum (5) ermöglicht.

6. Verbindungsvorrichtung nach einem der vorhergehenden Ansprüche,
wobei das Verriegelungselement (6) aus Polymer hergestellt ist.

7. Verbindungsvorrichtung nach einem der vorhergehenden Ansprüche, wobei die Aufnahme (4) aus einem der folgenden Materialien hergestellt ist: metallisches Material, polymeres Material, Verbundmaterial, keramisches Material.

8. Verbindungsvorrichtung nach einem der vorhergehenden Ansprüche,
wobei der Schaft (2) und der Kugelkopf (3) aus einem der folgenden Materialien hergestellt sind: metallisches Material, polymeres Material, Verbundmaterial, keramisches Material.

9. Verfahren zur Herstellung einer verriegelbaren, modularen Verbindungsvorrichtung nach einem der Ansprüche 1 bis 8,
**dadurch gekennzeichnet, dass** es additiv durch Hinzufügen von Material erfolgt.

10. Verfahren zum Verriegeln einer verriegelbaren, modularen Verbindungsvorrichtung nach einem der Ansprüche 1 bis 4 und 6 bis 8 in Kombination mit Anspruch 5,
**dadurch gekennzeichnet, dass** es umfasst:
- einen Schritt (S1) der relativen Winkelausrichtung zwischen den beiden Teilen (E1, E2) über eine Winkelausrichtung zwischen dem ersten Element und dem zweiten Element; dann
- einen Füllschritt (S2), der darin besteht, den gesamten Innenraum (5) mit einem fließfähigen Material zu füllen, das dazu bestimmt ist, das Verriegelungselement (6) zu bilden, wobei das fließfähige Material durch das zumindest eine Füllloch (9), mit dem die Aufnahme (4) versehen ist, eingeführt wird; und
- einen Schritt (S3) des Ausbildens des Verriegelungselements (6) durch Aushärten des fließfähigen Materials, wodurch das Verriegelungselement (6) die relative Winkelausrichtung zwischen den beiden Teilen (E1, E2) verriegelt.

## Claims

1. Lockable modular connection device between two separate parts, said connection device (1) including a first element intended to be connected to one (E1) of the parts (E1, E2) and a second element intended to be connected to the other (E2) of the parts (E1, E2).
wherein the first element comprises a rod (2) rigidly connected to a ball joint (3) of overall spherical shape, the second element comprises a hollow housing (4) wherein said ball joint (3) is arranged, the housing (4) overall conforming to the ball joint (3) and being provided with an opening (4B) traversed by the rod (2), wherein said connection device (1) also comprises a space referred to as inner space (5) between an inner face (8) of the housing (4) and a peripheral face (7) of the ball joint (3) facing one another, and a locking element (6) arranged between the housing (4) and the ball joint (3), and wherein at least one of the ball joint (3) and the housing (4) is provided with patterns (10, 15) respectively on at least a portion of the peripheral face (7) of the ball joint or on at least a portion of the inner face (8) of the housing (4), **characterised in that** the locking element consists of a hardened material which fills the entirety of said inner space (5) and with respect to which said patterns (10, 15) form stops, to hold said ball joint (3) in a fixed position in said housing (4).

2. Connection device according to claim 1,
wherein the ball joint (3) is provided, on at least a portion of the peripheral face (7) thereof, with patterns (10).

3. Connection device according to claim 1 or 2,
wherein the housing (4) is provided, on at least a portion of the inner face (8) thereof, with patterns (15).

4. Connection device according to claims 2 and 3,
wherein the patterns (10) of the peripheral face (7) of the ball joint (3) and the patterns (15) of the inner face (8) of the housing (4) are complementary.

5. Connection device according to any one of the preceding claims,
wherein the housing (4) is provided with at least one filling hole (9) for accessing the inner space (5).

6. Connection device according to any one of the preceding claims,
wherein the locking element (6) is made of polymer.

7. Connection device according to any one of the preceding claims,
wherein the housing (4) is made of one of the following materials: metallic material, polymer material, composite material, ceramic material.

8. Connection device according to any one of the preceding claims,
wherein the rod (2) and the ball joint (3) are made of one of the following materials: metallic material, polymer material, composite material, ceramic material.

9. Method for manufacturing a lockable modular connection device according to any one of claims 1 to 8,
**characterised in that** it is of the additive layer manufacturing type.

10. Method for locking a lockable modular connection device according to any one of claims 1 to 4 and 6 to 8, taken in combination with claim 5,
**characterised in that** it comprises:
- a step (S1) of relative angular orientation between the two parts (E1, E2), via an angular orientation between the first element and the second element; then
- a filling step (S2), of filling the entire inner space (5) with a fluid material intended to form the locking element (6), the fluid material being introduced via said at least one filling hole (9) with which the housing (4) is provided; and
- a step (S3) of forming the locking element (6) by hardening the fluid material, whereby the locking element (6) locks the relative angular orientation between the two parts (E1, E2).
